# EUROPÄISCHE PATENTSCHRIFT

(11) **EP 1 655 815 B1**
(45) Veröffentlichungstag und Bekanntmachung des Hinweises auf die Patenterteilung: **16.09.2009**
(21) Anmeldenummer: 05021357.8
(22) Anmeldetag: 30.09.2005
(51) Int. Cl.: H02G 3/10, H02G 3/14

(54) **Gehäuseanordnung mit mindestens einer Verbindungsdose**
Housing arrangement with at least one connection box
Agencement de logement avec au moins une boite de connexion

(30) Priorität: 05.10.2004 DE 102004049014
(43) Veröffentlichungstag der Anmeldung: 10.05.2006
(73) Patentinhaber: Phoenix Contact GmbH & Co. KG, 32825 Blomberg (DE)
(72) Erfinder: Lange, Ralf, 32805 Horn-Bad Meinberg (DE); Janke, Robert, 32825 Blomberg (DE); Lödige, Hubert, 32839 Steinheim (DE)
(74) Vertreter: Gesthuysen, von Rohr & Eggert

(56) Entgegenhaltungen:
- EP-A- 1 365 376
- DE-B- 1 148 152
- DE-B- 1 262 383
- US-A- 3 782 589

## Beschreibung

Die Erfindung betrifft eine Gehäuseanordnung mit mindestens einer Verbindungsdose, einem Sockelteil und einem Deckel, wobei die Verbindungsdose ein quadratisches Gehäuse aufweist, im Gehäuse eine mindestens eine Anschlußklemme aufweisende Klemmenleiste zum elektrischen Anschluß eines elektrischen Kabels oder einer Leitung angeordnet ist und das Gehäuse mindestens eine Öffnung für ein elektrisches Kabel oder eine Leitung aufweist Daneben betrifft die Erfindung noch eine Verbindungsdose mit einem quadratischen Gehäuse und mit mindestens einer mindestens eine Anschlußklemme aufweisenden Klemmenleiste zum elektrischen Anschluß eines elektrischen Kabels oder einer Leitung, wobei das Gehäuse mindestens eine Öffnung für das elektrische Kabel oder die Leitung aufweist.

Verbindungsdosen, die häufig auch als Installationsdosen, Anschlußdosen oder Kabeldosen bezeichnet werden, sind in mannigfachen Ausführungsformen bekannt. Geht es um das Anschließen eines Kabels an ein elektrisches Gerät oder eine Maschine, so wird die Dose als Anschlußdose bezeichnet. Sollen zwei Kabel oder Leitungen miteinander verbunden werden, so wird die Dose als Verbindungsdose bezeichnet. Im allgemeinen sind dabei die Anschlußdose und die Verbindungsdose im wesentlichen identisch ausgebildet, so daß im folgenden stets von einer Verbindungsdose gesprochen wird.

Derartige Dosen bestehen zumeist aus einem Unterteil und einem auf das Unterteil aufschraubbaren Deckel. Die bekannten Dosen haben unterschiedliche Querschnittsgestalt, und in ihrem Innenraum sind Klemmen zum elektrischen Anschluß eines elektrischen Kabels oder einer Leitung in unterschiedlicher Weise angeordnet. In der Regel werden dabei anstelle einzelner Klemmen zusammenhängende Klemmenleisten verwendet, die mehrere Anschlußklemmen aufweisen. Aus der DE 43 20 261 A1 ist bekannt, die Klemmen am Boden des Unterteils des Gehäuses zu befestigen. Das Festlegen der Klemmen am Dosenboden kann durch zusätzliche Befestigungselemente, beispielsweise durch Schrauben, erfolgen. Daneben ist es auch bekannt, dem Boden Vorsprünge anzuformen, auf die die Klemmen aufgesteckt werden können.

An jede Klemme kann dabei eine Ader eines elektrischen Kabels angeschlossen werden. Anstelle von elektrischen Kabeln, die zur Übertragung von Strom dienen, also eine Anlage oder Maschine mit dem notwendigen Betriebsstrom bzw. der notwendigen Betriebsspannung versorgen, können auch elektrische Leitungen an die Verbindungsdosen angeschlossen werden, die in erster Linie oder zusätzlich zur Übertragung von elektrischen Signalen, d. h. zur Übertragung von Informationen, dienen. Dies ist beispielsweise bei sogenannten Sensor-Aktor-Systemen der Fall. Die Verbindungsdosen dienen dabei als mechanischer Schutz für die im Inneren angeordneten Klemmen sowie als elektrischer Schutz für die an den Klemmen realisierte elektrische Verbindung zwischen verschiedenen Kabeln oder Leitungen. Das Gehäuse der Verbindungsdosen besteht daher in der Regel aus einem den jeweiligen Anforderungen genügendem Kunststoff mit einer entsprechenden Schutzklasse, beispielsweise IP 66 oder höher.

Derartige Verbindungsdosen werden oft in einer Mehrzahl zusammen in Schaltschränken angeordnet, wobei die Unterteile häufig Befestigungsmöglichkeiten, beispielsweise Haken oder Löcher, zur Befestigung der Verbindungsdosen auf einer Tragschiene oder an einer Montagewand aufweisen. Zur Verbindung der einzelnen Verbindungsdosen miteinander sind Unterteile bekannt, die an ihren Seitenwänden Haken aufweisen, so daß mehrere Verbindungsdosen zu einer Gehäuseanordnung miteinander verbunden werden können, wobei die einzelnen Verbindungsdosen in einer Ebene nebeneinander und übereinander angeordnet sind. Nachteilig ist hierbei jedoch, daß bei den angeformten Haken zum einen die Gefahr besteht, daß diese abbrechen, zumindest wenn die Verbindungsdosen mehrmals miteinander verbunden und wieder gelöst werden. Darüber hinaus ist die durch die Haken erreichbare Verriegelung der einzelnen Verbindungsdosen bei mechanischer Beanspruchung der Gehäuseanordnung, beispielsweise bei Vibrationen, nicht besonders sicher.

Aus der US 3,782,589 A ist ein stapelbares Gehäuse für elektronische Bauteile bekannt, das aus lösbar miteinander verbundenen Boden-, Deck- und Seitenteilen besteht. Um das Gehäuse mit weiteren gleichartigen Gehäusen sicher stapeln zu können, ist bei dem bekannten Gehäuse benachbart zu einem der Seitenteile am Oberteil eine horizontal vorspringende Kante vorgesehen und am Bodenteil eine komplementär geformte horizontale Aussparung ausgebildet, in welcher die Kante eines anderen Gehäuses mit Spiel einschiebbar ist. Zusätzlich sind auf der der ersten Kante und der Aussparung gegenüberliegenden Seite des Gehäuses eine zweite Kante sowie ein Schnappverschluß ausgebildet, wobei zur Verriegelung von zwei aufeinander gestapelten Gehäusen der Schnappverschluß des einen Gehäuses mit der zweiten Kante des anderen Gehäuses verrastet wird.

Der Erfmdung liegt daher die Aufgabe zugrunde, eine eingangs beschriebene Gehäuseanordnung sowie eine Verbindungsdose zur Verfügung zu stellen, die dem Benutzer die Möglichkeit gibt, die Gehäuseanordnung modular aufzubauen, und dabei einzelne Verbindungsdosen sicher miteinander oder mit einem Sockelteil zu verbinden. Dabei sollen die Verbindungsdosen in wirtschaftlicher Weise hergestellt werden können.

Diese Aufgabe ist bei der eingangs beschriebenen Gehäuseanordnung dadurch gelöst, daß am Gehäuse der Verbindungsdose mindestens ein Verriegelungselement derart schwenkbar angeordnet ist, daß es aus einer ersten - offenen - Stellung in eine zweite - verriegelnde - Stellung verbringbar ist, daß im Bereich der Ecken außen am Gehäuse der Verbindungsdose oder am Sockelteil vorstehende Rippen ausgebildet sind, wobei das Verriegelungselement im wesentlichen U-formig gebogen ist und einen als Betätigungsbügel dienenden U-Rücken und zwei U-Schenkel aufweist, deren Enden derart abgebogen sind, daß sie in der zweiten - verriegelnden - Stellung die Rippen am Gehäuse einer zweiten Verbindungsdose oder des Sockelteils umgreifen.

Durch die Anordnung eines Verriegelungselements am Gehäuse der Verbindungsdose ist eine Möglichkeit geschaffen, die Verbindungsdose auf einfache aber dennoch sichere Art und Weise mit einer zweiten Verbindungsdose oder mit dem Sockelteil zu verbinden, wobei aufgrund der Schwenkbarkeit des Verriegelungselements die Verriegelung auch einfach wieder gelöst werden kann, so daß eine große Flexibilität bei der Anordnung der Gehäuseanordnung gegeben ist. Dadurch, daß das Verriegelungselement im wesentlichen U-förmig gebogen ist, kann es eine Seite des Gehäuses umgreifen, so daß die Außenabmessungen der Verbindungsdose durch das Verriegelungselement nur unwesentlich vergrößert werden. Neben dem als Betätigungsbügel dienenden U-Rücken weist das Verriegelungselement zwei U-Schenkel auf, deren Enden derart abgebogen sind, daß sie in der zweiten - verriegelnden - Stellung entsprechende Rippen am Gehäuse einer zweiten Verbindungsdose oder am Sockelteil umgreifen.

Zur Befestigung zweier Verbindungsdosen übereinander wirkt somit das Verriegelungselement der einen Verbindungsdose mit den am Gehäuse der anderen Verbindungsdose ausgebildeten Rippen zusammen, wobei durch die schwenkbare Anordnung des Verriegelungselements die abgebogenen Enden der U-Schenkel einfach mit den Rippen in Eingriff gebracht werden können.

Gemäß einer bevorzugten Ausgestaltung einer erfindungsgemäßen Gehäuseanordnung mit mindestens zwei Verbindungsdosen sind die einzelnen Verbindungsdosen um 0°, 90°, 180° oder 270° zueinander verdreht übereinander montierbar. Dadurch wird die Möglichkeit geschaffen, die einzelnen Verbindungsdosen mit den in den Gehäusen angeordneten Öffnungen jeweils optimal auf die Richtung der ankommenden bzw. abgehenden Kabel oder Leitungen auszurichten. Die erfindungsgemäße Gehäuseanordnung stellt somit einen modular aufbaubaren Energieverteiler dar, bei dem die erforderliche Anzahl an Verbindungsdosen entsprechend einem Turm übereinander montiert werden kann. Die Befestigung der einzelnen übereinander montierten Verbindungsdosen erfolgt dabei einfach mittels der am Gehäuse der einzelnen Verbindungsdosen angeordneten Verriegelungselemente.

Neben der zuvor beschriebenen Gehäuseanordnung betrifft die vorliegende Erfindung insbesondere auch eine einzelne Verbindungsdose, mit einem quadratischen Gehäuse und mit mindestens einer Klemmenleiste zum elektrischen Anschluß eines elektrischen Kabels oder einer Leitung, wobei das Gehäuse mindestens eine Öffnung für das elektrische Kabel oder die Leitung aufweist. Die erfindungsgemäße Verbindungsdose, die insbesondere zur Verwendung bei einer zuvor beschriebenen Gehäuseanordnung geeignet ist, ist zunächst und im wesentlichen dadurch gekennzeichnet, daß am Gehäuse mindestens ein Verriegelungselement zur Befestigung der Verbindungsdose an einer zweiten Verbindungsdose oder an einem Sockelteil derart schwenkbar angeordnet ist, daß das Verriegelungselement aus einer ersten - offenen - Stellung in eine zweite - verriegelnde - Stellung verbringbar ist, daß im Bereich der Ecken außen am Gehäuse vorstehende Rippen ausgebildet sind, und daß das Verriegelungselement im wesentlichen U-förmig gebogen ist und einen als Betätigungsbügel dienenden U-Rücken und zwei U-Schenkel aufweist, deren Enden derart abgebogen sind, daß sie in der zweiten - verriegelnden - Stellung die Rippen am Gehäuse einer zweiten Verbindungsdose oder eines Sokkelteils umgreifen.

Wie zuvor bereits im Zusammenhang mit der erfindungsgemäßen Gehäusean-ordnung ausgeführt worden ist, ist durch die Anordnung des Verriegelungselements am Gehäuse der Verbindungsdose eine einfache aber dennoch sichere Befestigung der Verbindungsdose an einer zweiten Verbindungsdose oder an einem Sockelteil möglich. Durch die an den Ecken des Gehäuses ausgebildeten Rippen besteht gleichzeitig die Möglichkeit, daß eine zweite, entsprechend ausgebildete Verbindungsdose mit ihrem Befestigungselement an der ersten Verbindungsdose befestigt wird.

Gemäß einer bevorzugten Ausgestaltung sind an der Verbindungsdose zwei Verriegelungselemente an zwei gegenüberliegenden Seiten des Gehäuses schwenkbar angeordnet. Hierdurch wird die Sicherheit der Befestigung weiter erhöht, wobei insbesondere ein einseitiges Verkippen verhindert wird.

Gemäß einer weiteren, besonders vorteilhaften Ausgestaltung der Erfindung weist das Verriegelungselement ein federbelastetes Entriegelungssehutzelement auf, wobei das Verriegelungselement durch das Entriegelungsschutzelement in der zweiten - verriegelnden - Stellung gehalten wird und erst durch Aufbringen einer der Federkraft des Entriegelungsschutzelements entgegenwirkenden Kraft in die erste - offene - Stellung verschwenkbar ist. Durch das Entriegelungsschutzelement wird somit ein ungewolltes "Zurückschwenken" des Verriegelungselements aus der verriegelnden Stellung sicher verhindert. Dadurch ist gewährleistet, daß sich die Befestigung zwischen zwei Verbindungsdosen oder zwischen einer Verbindungsdose und dem Sockelteil auch bei starken Vibrationen, die insbesondere bei der Anordnung der Verbindungsdose bzw. der Gehäuseanordnung an einem Maschinenteil auftreten können, nicht unbeabsichtigt löst. Dadurch, daß das Entriegelungsschutzelement federbelastet ist, wird das Verriegelungselement zum einen selbsttätig in der zweiten Stellung gehalten, ist jedoch zum anderen eine gewollte Entriegelung des Verriegelungselements einfach möglich.

Vorteilhafterweise sind die beiden U-Schenkel des Verriegelungselements als Entriegelungsschutzelement ausgebildet. Die beiden U-Schenkel weisen dann einen Befestigungsbereich, einen Federbereich und einen Verbindungsbereich auf, wobei das Verriegelungselement im Befestigungsbereich schwenkbar am Gehäuse angeordnet ist, der Verbindungsbereich einerseits mit dem U-Rücken und andererseits über den Federbereich mit dem Befestigungsbereich verbunden ist und der Befestigungsbereich die abgebogenen Enden der U-Schenkel aufweist. Dadurch, daß die beiden U-Schenkel als Entriegelungsschutzelement ausgebildet sind, verringert sich die Anzahl der erforderlichen Bauteile.

Insbesondere kann das Verriegelungselement mit dem als Betätigungsbügel dienenden U-Rücken und den als Entriegelungsschutzelement dienenden U-Schenkeln einstückig aus einem Metallteil gestanzt und abgebogen werden.

Die schwenkbare Lagerung des vorzugsweise aus Metall hergestellten Verriegelungselements am Gehäuse erfolgt gemäß einer bevorzugten Ausgestaltung dadurch, daß im Befestigungsbereich der U-Schenkel jeweils ein Loch ausgebildet ist, und daß korrespondierend dazu an zwei gegenüberliegenden Seiten des Gehäuses zwei Stifte ausgebildet sind, wobei die Befestigungsbereiche mit den Löchern auf die Stifte aufrastbar sind, so daß die Stifte die Drehachse für das Verriegelungselement bilden. Die Stifte sind dabei vorteilhafterweise einstückig mit dem Gehäuse verbunden. Daneben besteht grundsätzlich auch die Möglichkeit, an zwei gegenüberliegenden Seiten des Gehäuses entsprechende Löcher auszubilden, in die dann am Befestigungsbereich der U-Schenkel angeordnete Stifte einrasten können.

Zur Sicherung des Verriegelungselements in der zweiten - verriegelnden - Stellung ist das Entriegelungsschutzelement vorzugsweise seinerseits fixierbar. Gemäß einer bevorzugten Ausgestaltung ist hierzu im Verbindungsbereich der U-Schenkel eine Entriegelungsausnehmung und am Gehäuse ein korrespondierender Entriegelungshaken ausgebildet, wobei der Entriegelungshaken in der zweiten - verriegelnden - Stellung in die Entriegelungsausnehmung eingreift und dadurch ein Verschwenken des Verriegelungselements in die erste Stellung verhindert. Greift der Entriegelungshaken in die Entriegelungsausnehmung im Verbindungsbereich, so wird dadurch zunächst das Entriegelungsschutzelement fixiert. Dadurch, daß der Verbindungsbereich über den Federbereich mit dem Befestigungsbereich des Entriegelungsschutzelements verbunden ist, ist dann auch der Befestigungsbereich fixiert, so daß das Verriegelungselement nicht verschwenkt werden kann. Diese Verriegelung kann nun dadurch gelöst werden, daß der Verbindungsbereich entgegen der Richtung der Federkraft des Federbereichs heruntergedrückt wird, wodurch der Entriegelungshaken nicht mehr länger in die Entriegelungsausnehmung eingreift. Dadurch sind die als Entriegelungsschutzelemente dienenden U-Schenkel nicht mehr in ihrer Lage fixiert, so daß das Verriegelungselement aus der zweiten Stellung in die erste Stellung verschwenkt werden kann.

Gemäß einer bevorzugten Ausgestaltung der erfindungsgemäßen Verbindungsdose ist der Federbereich mäanderförmig ausgebildet. Hierdurch läßt sich auch der Federbereich der U-Schenkel und somit das Verriegelungselement insgesamt sehr einfach durch Ausstanzen und Umbiegen herstellen. Da der Federbereich die labilste Stelle des Verriegelungselements darstellt, ist gemäß einer bevorzugten Ausgestaltung vorgesehen, daß die U-Schenkel des Verriegelungselements jeweils von einem Schutzelement abgedeckt sind, wobei die Schutzelemente einstückig mit dem U-Rücken verbunden und im wesentlichen parallel zu den U-Schenkeln abgebogen sind. Durch die Abdeckung der U-Schenkel wird insbesondere auch der mechanisch empfindliche Federbereich abgedeckt, so daß der Federbereich gegen Beschädigungen von außen geschützt ist. Da die Schutzelemente einstückig mit dem U-Rücken verbunden sind, wird auch durch deren Ausgestaltung der Arbeitsaufwand bei der Herstellung des Verriegelungselements nicht wesentlich erhöht. Insbesondere sind keine separaten Bauteile erforderlich, so daß es auch keiner separaten Befestigung der Schutzelemente an dem Verriegelungselement bedarf.

Im einzelnen gibt es nun eine Vielzahl von Möglichkeiten, die erfindungsgemäße Gehäuseanordnung bzw. die erfindungsgemäße Verbindungsdose auszugestalten und weiterzubilden. Dazu wird verwiesen einerseits auf die den Patentansprüchen 1 und 3 nachgeordneten Patentansprüche, andererseits auf die nachfolgende Beschreibung eines bevorzugten Ausführungsbeispiels in Verbindung mit der Zeichnung. In der Zeichnung zeigen
- Fig. 1: eine erfindungsgemäße Gehäuseanordnung mit einer Verbindungsdose, einem Sockelteil und einem Deckel, im noch nicht montierten Zustand,
- Fig. 2: die Gehäuseanordnung gemäß Fig. 1, im montierten Zustand,
- Fig. 3: eine vergrößerte Darstellung eines Teilbereichs einer erfindungsgemäßen Verbindungsdose mit einem Verriegelungselement in der ersten - offenen - Stellung (Fig. 3a) und in der zweiten - verriegelnden - Stellung (Fig. 3b) und

- Fig. 4: eine weitere, ebenfalls vergrößerte Darstellung eines Teilbereich der erfindungsgemäßen Verbindungsdose mit einem Verriegelungselement.

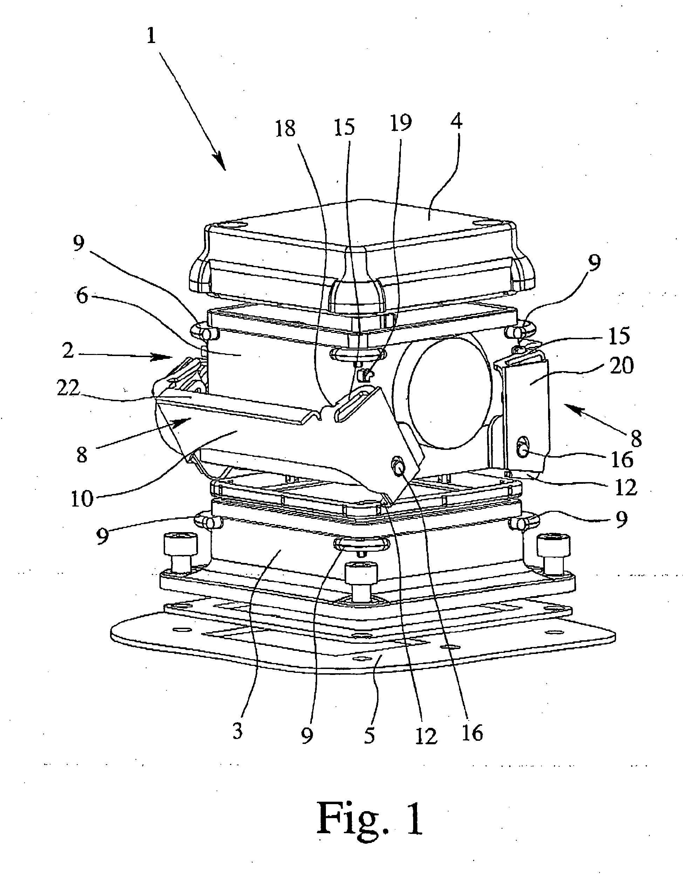

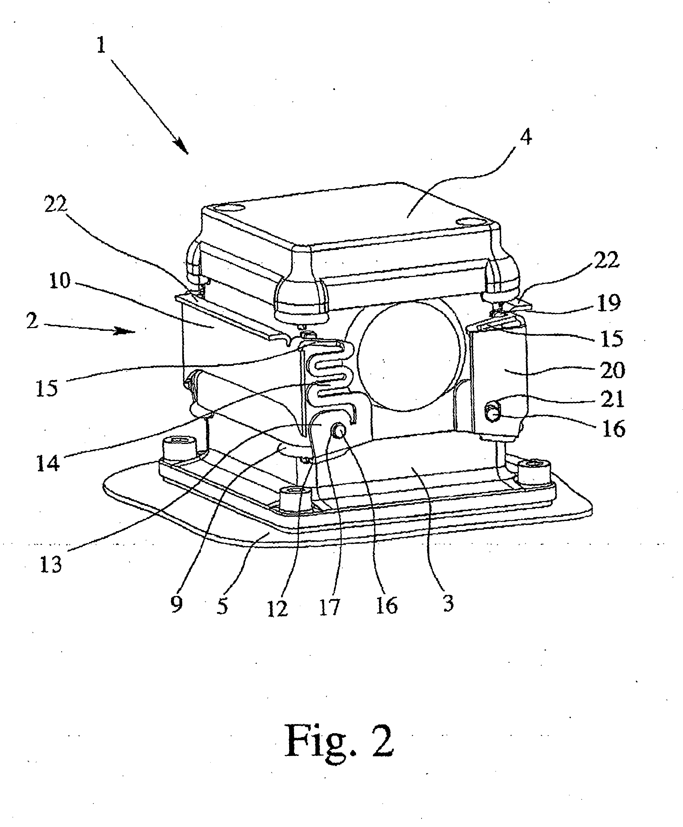

Die Fig. 1 und 2 zeigen eine Gehäuseanordnung 1 mit einer Verbindungsdose 2, einem Sockelteil 3 und einem Deckel 4. Neben der hier nur dargestellten Ausführungsform einer Gehäuseanordnung 1 mit einer Verbindungsdose 2 besteht auch die Möglichkeit, mehrere Verbindungsdosen 2 übereinander anzuordnen, so daß ein Turm mit mehreren Verbindungsdosen 2 entsteht. Der Deckel 4 ist dann auf der obersten Verbindungsdose 2 aufgeschraubt, während die unterste Verbindungsdose 2 mit dem Sockelteil 3 verbunden ist. Die Gehäuseanordnung 1 kann über das Sockelteil 3 beispielsweise an ein hier nur ausschnittsweise dargestelltes Maschinengehäuse 5 oder in einem Schaltschrank befestigt werden.

Die Verbindungsdose 2 weist ein quadratisches Gehäuse 6 auf, in dem eine - hier nicht dargestellte - mehrere Anschlußklemmen aufweisende Klemmenleiste zum Anschluß eines elektrischen Kabels oder einer Leitung angeordnet ist. Als Klemmenleiste kann dabei insbesondere ein Steckverbinder verwendet werden, bei dem die einzelnen Anschlußklemmen als Schraub- oder Federkraftklemmen ausgebildet sind. Werden mehrere Verbindungsdosen 2 übereinander angeordnet, so kann mit Hilfe der einzelnen Steckverbinder eine einfache kaskadierbare Verbindung aufgebaut werden. Um ein elektrisches Kabel oder eine Leitung an die im Inneren des Gehäuses 6 angeordnete Klemmenleiste anschließen zu können, weist das Gehäuse 6 mindestens eine Öffnung 7 auf. Das Kabel kann dann mittels einer Kabelverschraubung in der Öffnung 7 befestigt werden.

Zur Befestigung der Verbindungsdose 2 an einer zweiten Verbindungsdose oder - wie hier dargestellt - am Sockelteil 3 sind am Gehäuse 6 zwei Verriegelungselemente 8 schwenkbar angeordnet und im Bereich der Ecken außen am Gehäuse 6 der Verbindungsdose 2 und am Sockelteil 3 vorstehende Rippen 9 ausgebildet. Das Verriegelungselement 8, das aus einer ersten - offenen - Stellung in eine zweite - verriegelnde - Stellung schwenkbar ist, ist im wesentlichen U-förmig ausgebildet, wobei das Verriegelungselement 8 einen als Betätigungsbügel dienenden U-Rücken 10 und zwei U-Schenkel 11 aufweist, deren Enden 12 derart abgebogen sind, daß sie in der zweiten Stellung die Rippen 9 am Sockelteil 3 umgreifen. Bei der in Fig. 1 dargestellten Verbindungsdose 2 ist das auf der linken Seite des Gehäuses 6 angeordnete Verriegelungselement in der ersten - offenen - Stellung und das auf der rechten Seite des Gehäuses 6 angeordnete Verriegelungselement 8 in der zweiten - verriegelnden - Stellung dargestellt. Aus der Fig. 1 ist darüber hinaus erkennbar, daß an allen vier Ecken des Gehäuses 6 der Verbindungsdose 2 bzw. des Sockelteils 3 entsprechende Rippen 9 angeordnet sind, die sich jeweils um etwa 270° um die Ecken herum erstrecken, so daß die Verbindungsdose 2 wahlweise in vier jeweils um 90° zueinander verdrehten Positionen auf dem Sockelteil 3 fixierbar ist.

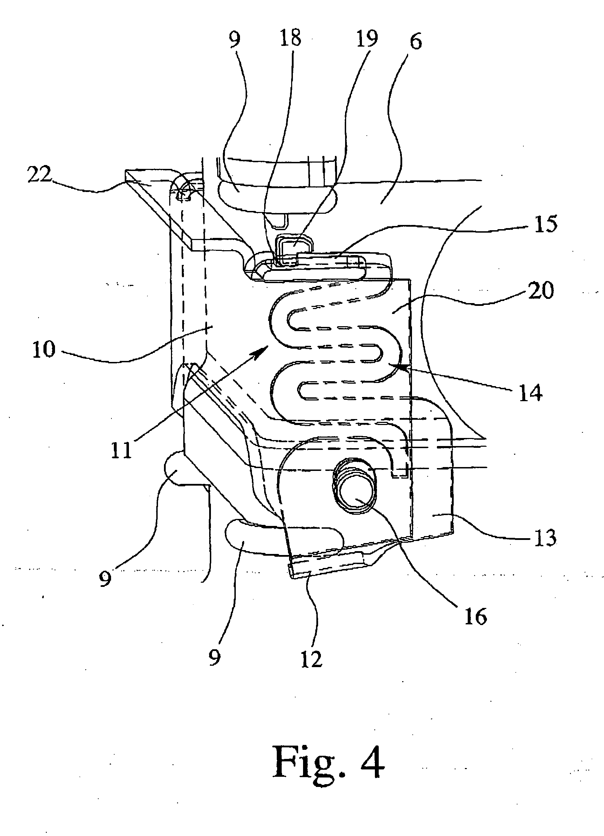

Um das Verriegelungselement 8 in der zweiten - geschlossenen - Stellung zu fixieren, sind die beiden U-Schenkel 11 als federbelastete Entriegelungsschutzelemente ausgebildet. Die beiden U-Schenkel 11 weisen hierzu einen Befestigungsbereich 13, einen Federbereich 14 und einen Verbindungsbereich 15 auf. Wie insbesondere aus den Darstellungen gemäß den Fig. 2 und 4 zu erkennen ist, ist das Verriegelungselement 8 im Bereich der Befestigungsbereiche 13 schwenkbar am Gehäuse 6 angeordnet. Hierzu sind an zwei gegenüberliegenden Seiten des Gehäuses 6 jeweils zwei Stifte 16 und im Befestigungsbereich 13 der U-Schenkel 11 jeweils ein Loch 17 zur Aufnahme der Stifte 16 ausgebildet. Die Stifte 16 bilden somit die Drehachse für das Verriegelungselement 8. Neben dem Loch 17 weist der Befestigungsbereich 13 auch das abgebogene Ende 12 des U-Schenkels 11 auf, so daß der Befestigungsbereich 13 zum einen zur Lagerung des Verriegeluhgselements 8 am Gehäuse 6 und zum anderen zur Fixierung der Verbindungsdose 2 an dem Sockelteil 3 oder an einer weiteren Verbindungsdose 2 dient.

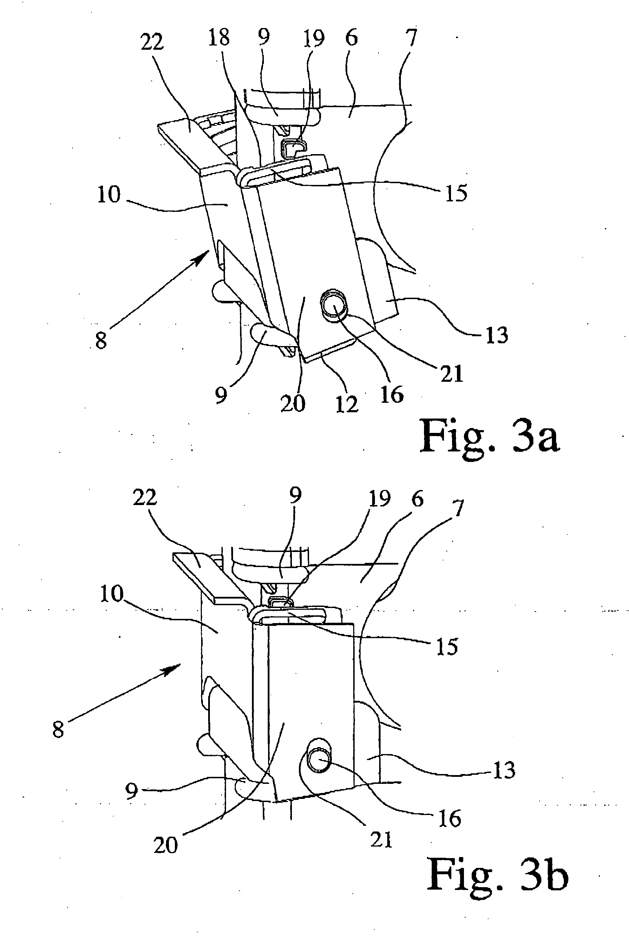

Zur Verriegelung der als Entriegelungsschutzelemente dienenden U-Schexakel 11 ist in den Verbindungsbereichen 15 jeweils eine Entriegelungsausnehmung 18 und korrespondierend dazu am Gehäuse 6 ein Entriegelungshaken 19 ausgebildet. In der in den Fig. 2, 3b und 4 gezeigten zweiten Stellung des Verriegelungselements 8 greift der Entriegelungshaken 19 in die Entriegelungsausnehmung 18 in dem Verbindungsbereich 15 ein, wodurch die U-Schenkel 11 - und mit ihnen insgesamt das Verriegelungselement 8 - in ihrer Position fixiert ist bzw, sind. Das Verriegelungselement 8 kann somit nicht aus der zweiten - verriegelnden - Position unbeabsichtigt in die erste - offene - Position zurückschwenken.

Soll das Verriegelungselement 8 gewollt aus der verriegelnden Stellung in die offene Stellung geschwenkt werden, so muß dafür gesorgt werden, daß der Entriegelungshaken 19 nicht mehr in die Entriegelungsausnehmung 18 im Verbindungsbereich 15 eingreift. Hierzu muß der Verbindungsbereich 15 entgegen der Federkraft des mäanderförmig ausgebildeten Federbereichs 14 heruntergedrückt und gleichzeitig das Verriegelungselement 8 abgeklappt werden. Entsprechend muß auch beim Verriegeln der Verbindungsdose 2 auf dem Sockelteil 3 das Verriegelungselement 8 gleichzeitig mit der Schwenkbewegung aus der ersten Stellung in die zweite Stellung entgegen der Federkraft des Federbereichs 14 nach unten gedrückt werden, so daß der Verbindungsbereich 15 am Entriegelungshaken 19 vorbeigeschwenkt werden kann, bis der Entriegelungshaken 19 in die Entriegelungsausnehmung 18 einrastet.

Zum Schutz des mechanisch etwas empfindlicheren Federbereichs 14 sind die U-Schenkel 11 des Verriegelungselements 8 jeweils von einem Schutzelement 20 abgedeckt. Die Schutzelemente 20 werden dabei von zwei Metallappen gebildet, die einstückig mit dem U-Rücken 10 verbunden und im wesentlichen parallel zu den U-Schenkeln 11 abgebogen sind. Das Verriegelungselement 8 ist somit insgesamt, d. h. mit dem als Betätigungsbügel dienenden U-Rücken 10, den als Entriegelungsschutzelemente fungierenden U-Schenkeln 11 und den Schutzelementen 20 einstückig und im wesentlichen U-förmig ausgebildet Um eine Beschädigung des Federbereichs 14 durch ein zu starkes Herabdrücken des Verbindungsbereichs 15 bzw. des U-Rückens 10 zu verhindern, ist in den Schutzelementen 20 jeweils ein Langloch 21 ausgebildet, in das die Stifte 16 durch die Löcher 17 in den U-Schenkeln 11 hineinragen. Durch eine entsprechende Dimensionierung des Langlochs 21 kann somit der maximale Federweg beim Herunterdrücken des Verbindungsbereichs 15 festgelegt werden. Eine weitere Auslenkung des U-Rückens 10, d. h. ein weiteres Zusammendrücken des Federbereichs 14, das eventuell zu einer Zerstörung des Federbereichs 14 führen könnte, wird dann dadurch verhindert, daß der obere Rand des Langloch 21 am Stift 16 anschlägt.

Zur besseren Veranschaulichung der Funktionsweise der als Entriegelungsschutzelemente dienenden U-Schenkel 11 ist in der Fig. 2 das Schutzelement 20 an einem U-Schenkel 11 des linken Verriegelungselements 8 weggeschnitten. In der Fig. 4 sind aus dem selben Grund die eigentlich von dem Schutzelement 20 abgedeckten Bereiche des U-Schenkels 11, d. h. der Federbereich 14 und der Verbindungsbereich 15, gestrichelt eingezeichnet. Zur leichteren Betätigung des in der zweiten Stellung eng an dem Gehäuse 6 anliegenden Verriegelungselements 8 ist an dessen U-Rücken 10 ein Griffabschnitt 22 abgebogen. Zur Lösung der Verriegelung kann der Griffabschnitt 22 heruntergedrückt und anschließend das Verriegelungselement 8 abgeklappt werden. Durch die damit verbundene Schwenkbewegung geben dann die Enden 12 der U-Schenkel 11 die Rippen 9 frei, so daß die Verbindungsdose 2 von dem Sockelteil 3 abgehoben werden kann.

## Patentansprüche

1. Gehäuseanordnung mit mindestens einer Verbindungsdose (2), einem Sockelteil (3) und einem Deckel (4), wobei die Verbindungsdose (2) ein quadratisches Gehäuse (6) aufweist, im Gehäuse (6) eine mindestens eine Anschlußklemme aufweisende Klemmenleiste zum elektrischen Anschluß eines elektrischen Kabels oder einer Leitung angeordnet ist und das Gehäuse (6) mindestens eine Öffnung (7) für ein elektrisches Kabel oder eine Leitung aufweist,
**dadurch gekennzeichnet,**
**daß** am Gehäuse (6) der Verbindungsdose (2) mindestens ein Verriegelungselement (8) schwenkbar angeordnet ist, derart, daß es aus einer ersten - offenen - Stellung in eine zweite - verriegelnde - Stellung verbringbar ist,
**daß** im Bereich der Ecken außen am Gehäuse (6) der Verbindungsdose (2) oder am Sockelteil (3) vorstehende Rippen (9) ausgebildet sind,
wobei das Verriegelungselement (8) im wesentlichen U-förmig gebogen ist und einen als Betätigungsbügel dienenden U-Rücken (10) und zwei U-Schenkel (11) aufweist, deren Enden derart abgebogen sind, daß sie in der zweiten - verriegelnden - Stellung die Rippen (9) am Gehäuse (6) einer zweiten Verbindungsdose (2) oder des Sockelteils (3) umgreifen.

2. Gehäuseanordnung nach Anspruch 1, mit mindestens zwei Verbindungsdosen (2), **dadurch gekennzeichnet, daß** die einzelnen Verbindungsdosen (2) um 0°, 90°, 180° oder 270° zueinander verdreht übereinander montierbar sind.

3. Verbindungsdose mit einem quadratischen Gehäuse (6) und mit mindestens einer mindestens eine Anschlußklemme aufweisenden Klemmenleiste zum elektrischen Anschluß eines elektrischen Kabels oder einer Leitung, wobei das Gehäuse (6) mindestens eine Öffnung (7) für elektrische Kabel oder Leitung aufweist, insbesondere zur Verwendung bei einer Gehäuseanordnung (1) nach Anspruch 1 oder 2,
**dadurch gekennzeichnet,**
**daß** am Gehäuse (6) mindestens ein Verriegelungselement (8) zur Befestigung der Verbindungsdose (2) an einer zweiten Verbindungsdose (2) oder an einem Sockelteil (3) derart schwenkbar angeordnet ist, daß das Verriegelungselement (8) aus einer ersten - offenen - Stellung in eine zweite - verriegelnde - Stellung verbringbar ist,
**daß** im Bereich der Ecken außen am Gehäuse (6) vorstehende Rippen (9) ausgebildet sind, und
**daß** das Verriegelungselement (8) im wesentlichen U-förmig gebogen ist und einen als Betätigungsbügel dienenden U-Rücken (10) und zwei U-Schenkel (11) aufweist, deren Enden derart abgebogen sind, daß sie in der zweiten - verriegelnden - Stellung die Rippen (9) am Gehäuse (6) einer zweiten Verbindungsdose (2) oder eines Sockelteils (3) umgreifen

4. Verbindungsdose nach Anspruch 3, **dadurch gekennzeichnet, daß** zwei Verriegelungselemente (8) an zwei gegenüberliegenden Seiten des Gehäuses (6) schwenkbar angeordnet sind.

5. Verbindungsdose nach Anspruch 3 oder 4, **dadurch gekennzeichnet, daß** das Verriegelungselement (8) ein federbelastetes Entriegelungsschutzelement aufweist, wobei das Verriegelungselement (8) durch das Entriegelungsschutzelement in der zweiten - verriegelnden - Stellung gehalten wird und erst durch Aufbringen einer der Federkraft des Entriegelungsschutzelements entgegenwirkenden Kraft in die erste - offene - Stellung verschwenkbar ist.

6. Verbindungsdose nach Anspruch 5, **dadurch gekennzeichnet, daß** die beiden U-Schenkel (11) des Verriegelungselements (8) als Entriegelungsschutzelement ausgebildet sind und jeweils einen Befestigungsbereich (13), einen Federbereich (14) und einen Verbindungsbereich (15) aufweisen, wobei das Verriegelungselement (8) im Befestigungsbereich (13) schwenkbar am Gehäuse (6) angeordnet ist, der Verbindungsbereich (15) einerseits mit dem Ü-Rücken und anderseits über den Federbereich (14) mit dem Befestigungsbereich (13) verbunden ist und der Befestigungsbereich (13) die abgebogenen Enden (12) der U-Schenkel (11) aufweist.

7. Verbindungsdose nach Anspruch 6, **dadurch gekennzeichnet, daß** an zwei gegenüberliegenden Seiten des Gehäuses (6) zwei Stifte (16) vorgesehen sind, die die Drehachse für das Verriegelungselement (8) bilden, und daß im Befestigungsbereich (13) der U-Schenkel (11) des Verriegelungselements (8) jeweils ein Loch (17) zur Aufnahme der Stifte (16) ausgebildet ist.

8. Verbindungsdose nach Anspruch 6 oder 7, **dadurch gekennzeichnet, daß** im Verbindungsbereich (15) eine Entriegelungsausnehmung (18) und am Gehäuse (6) ein korrespondierender Entriegelungshaken (19) ausgebildet ist,
wobei in der zweiten - verriegelnden - Stellung der Entriegelungshaken (19) in die Entriegelungsausnehmung (18) eingreift und **dadurch** ein Verschwenken des Verriegelungselements (8) in die erste - offene - Stellung verhindert.

9. Verbindungsdose nach einem der Ansprüche 6 bis 8, **dadurch gekennzeichnet, daß** der Federbereich (14) mäanderförmig ausgebildet ist.

10. Verbindungsdose nach einem der Ansprüche 6 bis 9, **dadurch gekennzeichnet, daß** die U-Schenkel (11) des Verriegelungselements (8) jeweils von einem Schutzelement (20) abgedeckt sind, wobei die Schutzelemente (20) einstückig mit dem U-Rücken (10) verbunden und im wesentlichen parallel zu den U-Schenkeln (11) abgebogen sind.

11. Verbindungsdose nach Anspruch 7 und 14, **dadurch gekennzeichnet, daß** in den Schutzelemente (20) jeweils ein Langloch (21) zur Aufnahme der Stifte (16) ausgebildet ist.

12. Verbindungsdose nach einem der Ansprüche 3 bis 11, **dadurch gekennzeichnet, daß** am U-Rücken (10) des Verriegelungselements (8) ein Griffabschnitt (22) gebogen ist.

13. Verbindungsdosen nach einem der Ansprüche 3 bis 12, **dadurch gekennzeichnet, daß** das Verriegelungselements (8) einstückig aus einem Metallteil gestanzt und abgebogen ist.

14. Verbindungsdose nach einem der Ansprüche 3 bis 13, **dadurch gekennzeichnet, daß** das Gehäuse (6) zwei Öffnungen (7) für elektrische Kabel oder Leitungen aufweist, insbesondere in zwei einander gegenüberliegenden Seitenwänden.

## Claims

1. Housing arrangement having at least one junction box (2), a base part (3) and a cover (4), wherein the junction box (2) has a square housing (6), a terminal strip with at least one terminal for electrical connection of an electric cable or a line is arranged in the housing (6) and the housing (6) has at least one opening for the electric cable or line
**characterized in**
**that** at least one locking element (8) is pivotably arranged on the housing (6) of the junction box (2) such that it can be moved out of a first - open - position into a second - locking - position,
**that** projecting ribs (9) are formed in the area of the outside corners of the housing (6) of the junction box (2) or on the base part (3),
wherein the locking element (8) is essentially U-shaped and has a U-bridge (10) which forms an actuating clip and two U-legs (11), the ends of which have a bent down portion, which, in the second - locking - position extend around the ribs (9) of the housing (6) of a second junction box (2) or of the base part (3).

2. Housing arrangement according to claim 1 having at least two junction boxes (2), **characterized in that** the individual junction boxes (2) are mountable one on top of the other and turned relative to the other by 0°, 90°, 180° or 270°.

3. Junction box having a square housing (6) and having a terminal strip with at least one terminal for electrical terminal connection of an electric cable or a line wherein the housing (6) has at least one opening (7) for the electric cable or line, in particular for use in a housing arrangement (1) according to claim 1 or 2,
**characterized in**
**that** at least one locking element (8) is pivotably arranged for affixing the junction box (2) on a second junction box (2) or on a base part (3) in such a manner that the locking element (8) can be moved out of a first - open - position into a second - locking - position,
**that** projecting ribs (9) are formed in the area of the outside corners of the housing (6), that the locking element (8) is essentially U-shaped and has a U-bridge (10) which forms an actuating clip and two U-legs (11), the ends of which have a bent down portion, which, in the second - locking - position extend around the ribs (9) of the housing (6) of a second junction box (2) or of the base part (3).

4. Junction box according to claim 3, **characterized in that** two locking elements (8) are pivotably arranged on two opposite sides of the housing (6).

5. Junction box according to claim 3 or 4, **characterized in that** the locking element (8) has a spring-loaded anti-release element, wherein the locking element (8) is kept by spring force of the anti-release element in the second - locking - position and is pivotable into the first - open - position by applying a force that counteracts the spring force of the anti-release element.

6. Junction box according to claim 5, **characterized in that** the U-legs (11) of the locking element (8) form an anti-release element and each has a fastening area (13), a spring area (14) and a connecting area (15), wherein the locking element (8) is pivotally mounted on the housing (6) in the fastening area (13), wherein the connecting area (15) is connected to the U-bridge on the one hand and by way of the spring area (14) on the other hand to the fastening area (13), and wherein the fastening area (13) has the bent-down ends (12) of the U-legs (11),

7. Junction box according to claim 6, **characterized in that** two pins (16) are provided on each of two opposing sides of the housing (6), which form an axis of rotation for the locking element (8) and wherein a hole (17) is provided in the fastening area (13) of the U-legs (11) of the locking element (8) for accommodating the pins (16).

8. Junction box according to claim 6 or 7, **characterized in that** a release recess (18) is formed in the connecting area (15) and a corresponding release hook (19) is formed on the housing (6), wherein the release hook (19), in the second - locking - position, engages the release recess (18) for preventing the locking element (8) from pivoting into the first - open - position.

9. Junction box according to claim 6, **characterized in that** the spring area (14) is made meander-shaped.

10. Junction box according to any one of claims 6 to 9, **characterized in that** each of the U-legs (11) of the locking element (8) is covered by a respective protective element (20), wherein the protective element (20) is integrally connected to the U-bridge and extends essentially parallel to the U-legs (11).

11. Junction box according to any one of claims 7 to 10, **characterized in that** a lengthwise hole (21) is formed in each of the protective elements (20) for accommodating the pins (16).

12. Junction box according to any one of claims 3 to 11, **characterized in that** a grip section (22) is formed by a bent portion of the U-bridge (10) of the locking element (8).

13. Junction box according to any one of claims 3 to 12, **characterized in that** the locking element (8) is a one-piece punched and bent metal part.

14. Junction box according to any one of claims 3 to 13, **characterized in that** the housing (6) has two openings (7) for electric cables or lines, in particular in two opposing sidewalls.

## Revendications

1. Agencement de boîtier comprenant au moins une boîte de connexion (2), une partie de socle (3) et un couvercle (4), la boîte de connexion (2) présentant un boîtier quadratique (6), une réglette de bornes présentant au moins une borne de raccordement pour le raccordement électrique d'un câble électrique ou d'une ligne étant disposée dans le boîtier (6) et le boîtier (6) présentant au moins une ouverture (7) pour un câble électrique ou une ligne,
**caractérisé en ce que**
sur le boîtier (6) de la boîte de connexion (2) est disposé au moins un élément de verrouillage (8) pouvant pivoter, de telle sorte qu'il puisse être amené d'une première position ouverte dans une deuxième position de verrouillage,
dans la région des coins à l'extérieur sur le boîtier (6) de la boîte de connexion (2) ou sur la partie de socle (3) sont réalisées des nervures saillantes (9),
l'élément de verrouillage (8) étant cintré essentiellement en forme de U et présentant une âme du U (10) servant d'étrier d'actionnement et deux branches du U (11) dont les extrémités sont recourbées de telle sorte qu'elles viennent en prise dans la deuxième position de verrouillage autour des nervures (9) sur le boîtier (6) d'une deuxième boîte de connexion (2) ou de la partie de socle (3).

2. Agencement de boîtier selon la revendication 1, comprenant au moins deux boîtes de connexion (2), **caractérisé en ce que** les boîtes de connexion individuelles (2) peuvent être montées de manière tournée de 0°, 90°, 180° ou 270° les unes par rapport aux autres.

3. Boîte de connexion comprenant un boîtier quadratique (6) et comprenant au moins une réglette de bornes présentant au moins une borne de raccordement pour le raccordement électrique d'un câble électrique ou d'une ligne, le boîtier (6) présentant au moins une ouverture (7) pour des câbles électriques ou des lignes, notamment pour l'utilisation avec un agencement de boîtier selon la revendication 1 ou 2,
**caractérisé en ce que**
sur le boîtier (6), est disposé au moins un élément de verrouillage (8) pouvant pivoter, pour la fixation de la boîte de connexion (2) à une deuxième boîte de connexion (2) ou à une partie de socle (3), de telle sorte que l'élément de verrouillage (8) puisse être amené d'une première position ouverte dans une deuxième position de verrouillage,
dans la région des coins à l'extérieur sur le boîtier (6) sont réalisées des nervures saillantes (9), et
l'élément de verrouillage (8) est cintré essentiellement en forme de U et présente une âme du U (10) servant d'étrier d'actionnement et deux branches du U (11) dont les extrémités sont recourbées de telle sorte qu'elles viennent en prise dans la deuxième position de verrouillage autour des nervures (9) sur le boîtier (6) d'une deuxième boîte de connexion (2) ou d'une partie de socle (3).

4. Boite de connexion selon la revendication 3, **caractérisée en ce que** deux éléments de verrouillage (8) sont disposés de manière pivotante sur deux côtés opposés du boîtier (6).

5. Boîte de connexion selon la revendication 3 ou 4, **caractérisée en ce que** l'élément de verrouillage (8) présente un élément de protection de déverrouillage sollicité par ressort, l'élément de verrouillage (8) étant maintenu par l'élément de protection de déverrouillage dans la deuxième position de déverrouillage et pouvant être pivoté dans la première position ouverte seulement par l'application d'une force agissant à l'encontre de la force de ressort de l'élément de protection de déverrouillage.

6. Boîte de connexion selon la revendication 5, **caractérisée en ce que** les deux branches du U (11) de l'élément de verrouillage (8) sont réalisées sous forme d'élément de protection de déverrouillage et présentent à chaque fois une région de fixation (13), une région de ressort (14) et une région de connexion (15), l'élément de verrouillage (8) étant disposé dans la région de fixation (13) de manière à pouvoir pivoter sur le boîtier (6), la région de connexion (15) étant connectée d'une part à l'âme du U et d'autre part par le biais de la région de ressort (14) à la région de fixation (13) et la région de fixation (13) présentant les extrémités recourbées (12) des branches du U (11).

7. Boite de connexion selon la revendication 6, **caractérisée en ce que** sur deux côtés opposés du boîtier (6) sont prévues deux goupilles (16), qui forment l'axe de rotation de l'élément de verrouillage (8), et **en ce que** dans la région de fixation (13) des branches du U (11) de l'élément de verrouillage (8) est réalisé à chaque fois un trou (17) pour recevoir les goupilles (16).

8. Boîte de connexion selon la revendication 6 ou 7, **caractérisée en ce que** dans la région de connexion (15) est réalisé un évidement de déverrouillage (18) et sur le boîtier (6) est réalisé un crochet de déverrouillage correspondant (19), et dans la deuxième position de verrouillage, le crochet de déverrouillage (19) vient en prise dans l'évidement de déverrouillage (18) et de ce fait empêche un pivotement de l'élément de verrouillage (8) dans la première position ouverte.

9. Boîte de connexion selon l'une quelconque des revendications 6 à 8, **caractérisée en ce que** la région de ressort (14) est réalisée en forme de méandre.

10. Boîte de connexion selon l'une quelconque des revendications 6 à 9, **caractérisée en ce que** les branches du U (11) de l'élément de verrouillage (8) sont à chaque fois recouvertes d'un élément de protection (20), les éléments de protection (20) étant connectés d'une seule pièce avec l'âme du U (10) et étant recourbés essentiellement parallèlement aux branches du U (11).

11. Boite de connexion selon les revendications 7 et 10, **caractérisée en ce que** dans les éléments de protection (20) est réalisé à chaque fois un trou oblong (21) pour recevoir les goupilles (16).

12. Boîte de connexion selon l'une quelconque des revendications 3 à 11, **caractérisée en ce que** sur l'âme du U (10) de l'élément de verrouillage (8) est courbée une portion de préhension (22),

13. Boîte de connexion selon l'une quelconque des revendications 3 à 12, **caractérisée en ce que** l'élément de verrouillage (8) est estampé d'une seule pièce à partir d'une partie métallique et est recourbé.

14. Boîte de connexion selon l'une quelconque des revendications 3 à 13, **caractérisée en ce que** le boîtier (6) présente deux ouvertures (7) pour des câbles électriques ou des lignes, en particulier dans deux parois latérales opposées l'une à l'autre.
